# EUROPEAN PATENT APPLICATION

(11) **EP 1 983 693 A1**
(43) Date of publication of application: **22.10.2008**
(21) Application number: 06840824.4
(22) Date of filing: 31.12.2006
(51) Int. Cl.: H04L 12/42

(54) **BINDING INTERFACE IN RPR AND ITS REALIZING METHOD AND APPARATUS**

(30) Priority: 03.03.2006 CN 200610056809
(71) Applicant: Huawei Technologies Co., Ltd., Longgang District, Shenzhen, Guangdong 518129 (CN)
(72) Inventor: SHI, Wenjiang, Shenzhen, Guangdong 518129 (CN); TENG, Xindong, Shenzhen, Guangdong 518129 (CN)
(74) Representative: Casalonga, Axel
(86) International application number: PCT/CN2006/003794
(87) International publication number: WO 2007/098663

(57) **Abstract**

The disclosure provides a trunk interface in Resilient Packet Ring (RPR), and method and apparatus for implementing interface trunking in RPR with a plurality of stations, at least one of the stations including a plurality of RPR interfaces. A plurality of physical link ports in an RPR interface are combined into a logical link port, so as to implement logical combination of a plurality of first physical link. A trunk interface is formed with the combined logical link ports, and a logical address is assigned to the trunk interface. Furthermore, the communication traffic of the stations may be apportioned among the physical link ports, so as to provide link balance. The physical links are provided on different rings. When any fault occurs, a new ring may be formed so as to make the communication link unblocked. With the present invention, the interface bandwidth is increased, the address (MAC address/IP address) resources are saved and the interface (link) reliability is increased.

## Description

The present application claims priority to Chinese patent application Serial No. 200610056809.1, entitled "Trunk Interface in Resilient Packet Ring, Method and Apparatus for Realizing the Trunk Interface", filed with SIPO on March 3, 2006, the entirety of which is incorporated herein by reference.

### FIELD OF THE INVENTION

The present invention relates to the field of telecommunication technologies, and more particularly, to a method and apparatus for interface trunking in Resilient Packet Rings (RPRs).

### BACKGROUND

With fast expansion of data services, the data processing capability of the Metropolitan Area Network (MAN) has become an important concern to most telecommunication operators. The existing technologies, such as IP over Asynchronous Transfer Mode (ATM), IP over Asynchronous Digital Hierarchy (SDH), and Metro Ethernet, have their own disadvantages respectively. Ethernet IP data services with the best-effort mechanism lack flexibility, QoS guarantee and satisfactory bandwidth management. SDH, which is very mature and dominates the telecommunication operation field currently, is disadvantageous in that the bandwidth utilization is not high and cannot get adapted to burst data services. In view of the above fact, a novel Media Access Control (MAC) protocol for optimization of IP packet transmission, that is, the Resilient Packet Ring (RPR) protocol is put on the agenda. The RPR technology has exhibited unique advantages due to its technical advancement, effectiveness in investment, superiority in performance, and support for diversified services.

The Resilient Packet Ring (RPR) technology is a layer 2 ring network technology, and provides a good networking scheme for broadband IP MAN operators. The RPR technology has a topology in which two-fiber optical fiber transfer rings in opposite directions are adopted. On the two fibers, data or control packets may be transmitted simultaneously in the clockwise and counterclockwise directions. When the RPR is operating, data and control signals may be transmitted over a fiber in the same direction without dependence on the other fiber in the opposite direction. In this manner, each of the inner and outer fibers in the RPR may transmit data or control signals simultaneously, and the bandwidth utilization is improved. The fairness and dynamic bandwidth management features in the RPR can ensure that stations in the RPR share the entire bandwidth resources fairly. Through automatic topology discovery and fair management of the ring bandwidth, as well as the reliable protection switching technology, the RPR can adjust the network operation state intelligently and automatically so that the packet data services may be transmitted normally in the RPR. Currently, the IEEE 802.17 working group is actively involved in the standardization task for the RPR.

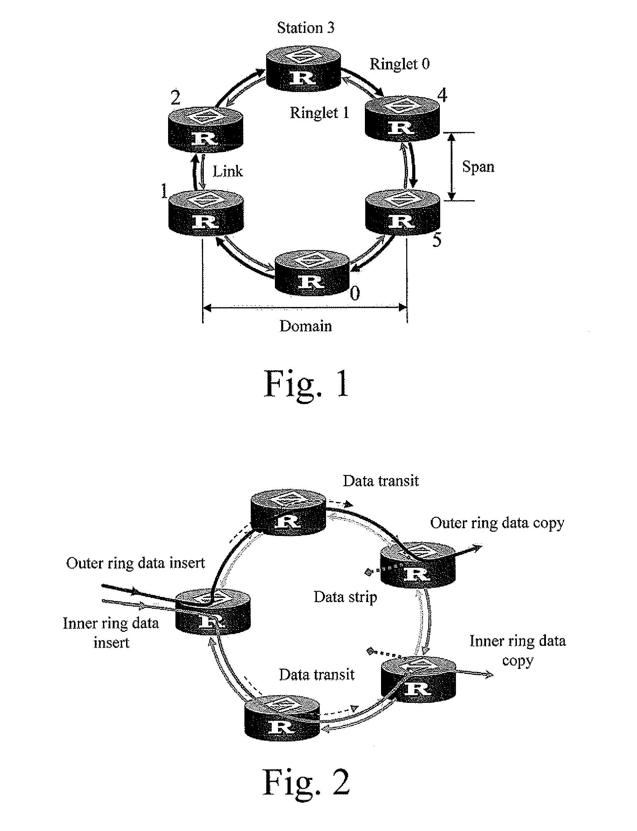

Detailed descriptions on the RPR are given below with reference to Fig.1 to Fig.4.

Fig. illustrates a typical RPR topology.

As shown in Fig.1, the RPR uses a topology including two rings in opposite directions. Each RPR interface on a device is coupled to a pair of fibers, and thus two rings are formed. Various spans on the rings operate at the same rate. Each of the two rings of the RPR can transmit data. The two rings may be referred to as Ringlet 0 which is clockwise and Ringlet 1 which is counterclockwise.

In the RPR, Ringlet 0 transmits data in the clockwise direction and Ringlet 1 transmits data in the counterclockwise direction. Each RPR station corresponds to an RPR physical interface of a device, and is assigned a 48-bint MAC address, and has an IP address assigned by the network layer as an identifier.

From the topological perspective, rings may be classified into open rings or closed rings. If a ring is disconnected, it is called an open ring; if a ring is closed, it is called a closed ring.

When a ring is disconnected, the station at the disconnection forms an edge, indicating that the ring is no longer a closed ring.

Stations are numbered from 0. Station 0 is the present station, or is referred to as the source station, the originating station or other terms. A station may be any computing device.

The distance from a station to the next station on a ring is called a hop. For example, the distance from station 0 to station 1 is 1 hop on ringlet 0, and 5 hops on ringlet 1.

Fig.2 illustrates a unicast data transmission in the RPR.

As shown in Fig.2, a unicast data transmission is performed in the RPR. At the source station, an insert operation is performed to carry data into ringlet 0 or ringlet 1. The destination station performs data copy and data strip operations. An intermediate station can only perform data transit operations.

The data processing in the RPR includes the following operations:
Insert: inserts a packet forwarded from other interfaces into a data stream of the RPR;
Copy: receives data from the data stream of the RPR, and delivers the data to the upper layer for processing;
Transit: forwards a data stream passing through the present station to the next station;
Strip: prevents the data passing through the present station from being further forwarded.

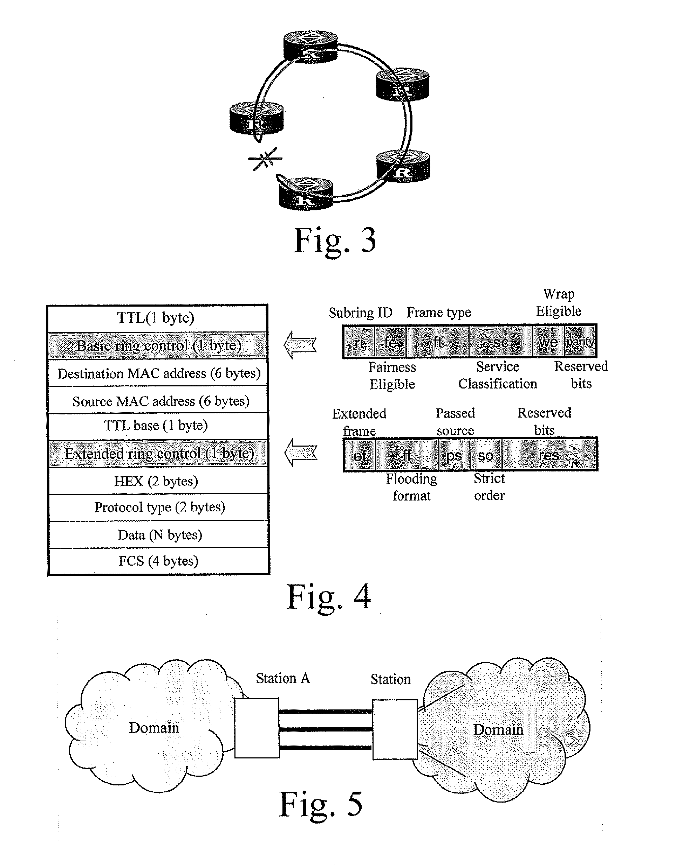

Fig.3 illustrates the process when a link failure occurs in the RPR according to the prior art.

An important reason for the RPR to achieve high reliability is that its self-healing ability is robust when any failure occurs. Failure protection switching within 50 ms can be implemented in the RPR.

Referring to Fig.3, when the link between two stations fails, ringlet 0 and ringlet 1 within the stations on both ends of the failing link are connected (the switching process consumes less than 50 ms) to form a new ring. In this manner, data transmission is not affected.

Fig.4 illustrates the data frame format in the RPR.

The RPR forwards a packet based on the destination MAC address, i.e., with the RPR forwarding mechanism, the destination MAC address is used to look up the forwarding table for an output interface. The forwarding table entry is established by learning the MAC address (similar to the switches).

Descriptions on Trunk technology, which relates to binding ports (interfaces) or link convergence, in the related arts, are given below with reference to Fig.5.

Fig.5 illustrates the Trunk interface application in the related arts.

The Trunk technology relates to port (interface) binding or link convergence, in which two or more physical interfaces are combined into one interface logically. In this manner, the available bandwidth of the interface may be increased, and the reliability of the interface (link) is improved (because data can still be transmitted over other links automatically when a physical link fails in the Trunk links).

The transmission medium characteristics of the twisted pair in the 100M Ethernet determine that the bandwidth between two interconnected 10/100 conventional switches is only 100M. If full duplex is used, the maximum transmission bandwidth may be up to 200M. Accordingly, a bottleneck is formed for the network backbone and the servers. To reach a higher data transmission rate, the transmission medium needs to be replaced. If 1000M optical fibers are used or an Ethernet is upgraded to 1000M Ethernet, although 1000M may be reached in terms of bandwidth, the cost is rather high (in some cases, even switches have to be replaced). It is not suitable for low-cost applications, e.g. in small and media enterprises or schools. If the Trunk technology is used, four ports are trunk together to reach 800M bandwidth. In this manner, a balance between the cost and the performance may be achieved.

As shown in Fig.5, station A and station B (which may be a switch or a router) are connected via three physical links. By configuring the interfaces of the two stations as Trunk interface, the three links form a Trunk link between the two stations. If each link has a bandwidth of 100M, a 300M flow is allowed between the two stations now. Meanwhile, the three links form redundant links. After one physical link fails, data can still be transmitted over the other two links. In this way, the Trunk link still can be considered as normal.

It can be seen that the interface trunking technology may greatly improve the bandwidth utilization and the interface reliability. However, the current interfaces supporting the Trunk function mainly include Ethernet type interfaces and POS type interfaces. In the RPR interfaces, the Trunk function has not been implemented yet.

Therefore, there is a need for an interface and method to implement interface trunking in the RPR.

### SUMMARY

Embodiments of the present invention provide a trunk interface in Resilient Packet Rings (RPRs) and a method and an apparatus for implementing interface trunking in the RPR with a plurality of stations.

An embodiment of the present invention provides an interface trunking method for implementing interface trunking in Resilient Packet Rings (RPRs) with a plurality of stations, at least one of the stations including a plurality of RPR interfaces, each of the RPR interfaces including a first physical link port and a second physical link port, the method including:
combining the plurality of first physical link ports into a first logical link port, so as to implement logical combination of a plurality of first physical links;
combining the plurality of second physical link ports into a second logical link port, so as to implement logical combination of a plurality of second physical links;
forming a trunk interface with the first logical link port and the second logical link port; and
assigning a logical address to the trunk interface.

The method may further include:
apportioning the communication traffic of the stations among each of the plurality of first physical link ports with a predetermined algorithm; and
apportioning the communication traffic of the stations among each of the plurality of second physical link ports with the predetermined algorithm.

An embodiment of the present invention provides an interface trunking apparatus adapted to implement interface trunking in Resilient Packet Rings (RPRs) with a plurality of stations, at least one of the stations including a plurality of RPR interfaces, each of the RPR interfaces including:
a first physical link port coupled to a first physical link, and
a second physical link port coupled to a second physical link,

The interface trunking apparatus includes:
a first combination module, adapted to combine the plurality of first physical link ports into a first logical link port, so as to implement logical combination of the plurality of first physical links;
a second combination module, adapted to combine the plurality of second physical link ports into a second logical link port, so as to implement logical combination of the plurality of second physical links; and
an interface forming module, adapted to form a trunk interface for communication with the first logical link port and the second logical link port.

An embodiment of the present invention also provides a trunk interface for use in Resilient Packet Rings (RPRs) with a plurality of stations, at least one of the stations including a plurality of RPR interfaces, each of the RPR interfaces including a first physical link port coupled to a first physical link and a second physical link port coupled to a second physical link, the trunk interface including:
a first logical link port formed by combining the plurality of first physical link ports;
   and
a second logical link port formed by combining the plurality of second physical link ports.

An embodiment of the present invention also provides a communication apparatus with a trunk interface, for performing communication function in Resilient Packet Rings (RPRs) according to the RPR protocol.

More preferably, the communication apparatus may further include:
a data insert module, adapted to perform data insert function in the RPR protocol; and/or
a data transit module, adapted to perform data transit function in the RPR protocol; and/or
a data copy and strip module, adapted to perform data copy and strip function in the RPR protocol based on a provision in the RPR protocol; and/or
a multicast and broadcast traffic processing module, adapted to process multicast and broadcast traffic in the RPR protocol; and/or
a station forwarding table entry learning module, adapted to perform station forwarding table entry learning in the RPR protocol, and to record the trunk interface to which one of the learned RPR interfaces belongs in a forwarding table as an output interface; and/or
a fairness algorithm processing module, adapted to process a fairness algorithm in the RPR protocol.

As described above, with the technical solution provided in embodiments of the present invention, interface trunking is implemented in RPRs with a plurality of stations, at least one of the stations including a plurality of RPR interfaces. A plurality of physical link ports in an RPR interface are combined into a logical link port, so as to implement logical combination of a plurality of physical links. A trunk interface is formed with the combined logical link ports, and a logical address is assigned to the trunk interface. Furthermore, the communication traffic of the stations may be apportioned among the physical link ports, so as to implement link balance. The physical links are provided on different rings so as to form redundant links. In this manner, even if one of the physical links fails, data may be transmitted over other links and the Trunk link may still be used normally. Accordingly, a new ring is formed when one ring fails, so that the communication link is smooth. With the present invention, the interface bandwidth is increased, the address (MAC address/IP address) resources are saved and the reliability of interfaces and links is increased.

### BRIEF DESCRIPTION OF THE DRAWINGS

The features and nature of the present invention will become more apparent from the detailed description set forth below when taken in conjunction with the drawings in which like reference characters identify correspondingly throughout.

Fig. illustrates a typical topology of the RPR in the prior art;

Fig.2 illustrates a unicast data transmission on the RPR in the prior art;

Fig.3 illustrates the process when a link fails in the RPR in the prior art;

Fig.4 illustrates the data frame format of the RPR in the prior art;

Fig.5 illustrates the Trunk interface application in the prior art;

Fig.6 illustrates the RPR interface trunking according to an embodiment of the present invention;

Fig.7 is a flow chart illustrating a method for implementing RPR interface trunking according to an embodiment of the present invention;

Fig.8 illustrates a topology for fault processing in implementing RPR interface trunking according to an embodiment of the present invention;

Fig.9 illustrates another topology for fault processing in implementing RPR interface trunking according to another embodiment of the present invention; and

Fig.10 illustrates a communication apparatus with a trunk interface according to an embodiment of the present invention.

### DETAILED DESCRIPTION

To clarify the principle, feature and advantage of the present invention, detailed descriptions are given below with reference to the accompanying drawings.

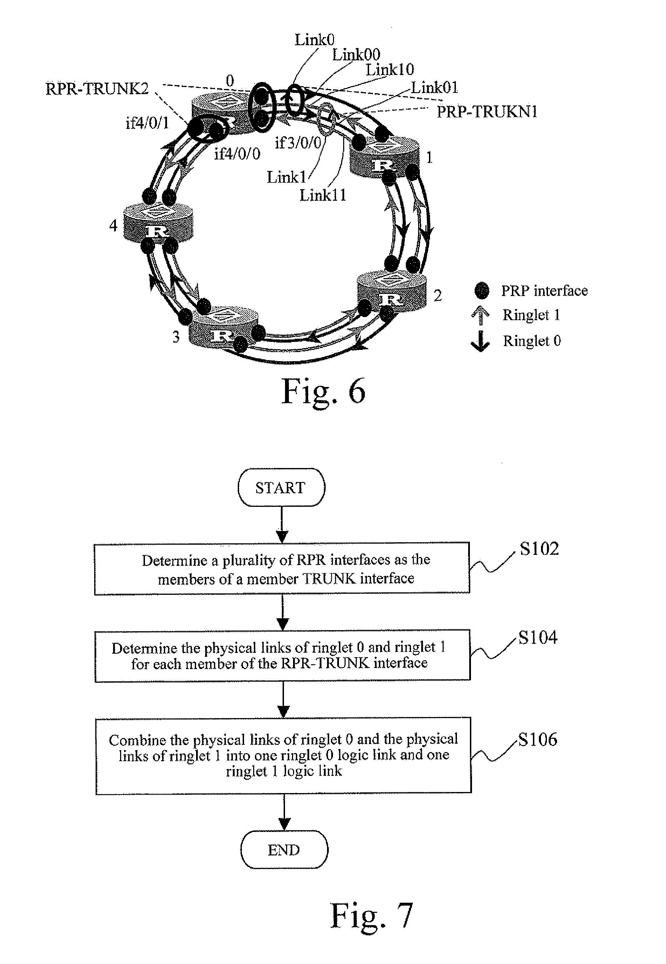

Fig.6 illustrates the RPR interface trunking according to an embodiment of the present invention, and Fig.7 is a flow chart illustrating a method for implementing RPR interface trunking according to an embodiment of the present invention.

In Fig.6, the member interfaces to be trunk may be two or more.

As shown in Fig.6, a network device, i.e. station 0, includes two member Trunk interfaces, RPR-Trunk 1 and RPR-Trunk 2. RPR-Trunk 1 and RPR-Trunk 2 include member interfaces if3/0/0 and if3/0/1 and member interfaces if4/0/0 and if4/0/1, respectively. Further, the member if3/0/0 includes ringlet 0 physical link port Link 00 and ringlet 1 physical link port Link 01, and the member if3/0/1 includes ringlet 0 physical link port Link 10 and ringlet 1 physical link port Link 11. Furthermore, with the Trunk technology similar to the related arts, the ringlet 0 physical link port Link 00 of the member if3/0/0 and the ringlet 0 physical link port Link 10 of the member if3/0/1 are combined into a ringlet 0 logical link port Link 0; and with the Trunk technology similar to the related arts, the ringlet 1 physical link port Link 01 of the member if3/0/0 and the ringlet 1 physical link port Link 11 of the member if3/0/1 are combined into a ringlet 1 logical link port Link 1. The resulting ringlet 0 logical link port Link 0 and ringlet 1 logical link port Link 1 form an RPR-Trunk 1 to perform the function of the RPR interface. In this manner, a plurality of ringlet 0 physical links and ringlet 1 physical links are combined to form a ringlet 0 logical link and a ringlet 1 logical link.

It can be seen from Fig.6 that when two RPR interfaces are trunk for use, the respective inner and outer rings are also trunk together (see the trunk ringlet 0 and ringlet 1 in the figure). The inserted data is transmitted over a link of ringlet 0 or ringlet 1, but it will not be transmitted over all Trunk links.

In practical applications, the RPR-Trunk interface needs to be configured for each device in the ring and the corresponding RPR interface needs to join the RPR-Trunk interface as a member. The RPR-Trunk interface may be a logical interface of the device, for example, it may be configured with a MAC address or an IP address. Because several physical interfaces are trunk into one logical interface, use of the Trunk interface may save IP/MAC addresses.

When an insert operation is to be performed on data received at an input interface of a station, the selected output interface is an RPR-Trunk interface, the interface indicating the direction of the RPR, that is, ringlet 0 or ringlet 1. In this case, a member interface (that is, an actual RPR physical interface) is selected according to a certain algorithm, and data is transmitted through the interface. After data is inserted, the remaining transmission processes are the same as the operations of the conventional RPR, including copy, transit and strip operations.

Fig.7 is a flow chart illustrating a method for implementing RPR interface trunking according to an embodiment of the present invention. As shown in Fig.7, the method for implementing RPR interface binding may include the following steps.

In step S102, a plurality of RPR interfaces for a station are determined as the members of a member Trunk interface. For example, as shown in Fig.6, station 0 includes two member Trunk interfaces, RPR-Trunk 1 and RPR-Trunk 2. RPR-Trunk 1 includes member interfaces if3/0/0 and if3/0/1; whereas RPR-Trunk 2 includes member interfaces if4/0/0 and if4/0/1.

In step S104, the physical link ports of ringlet 0 and ringlet 1 for each member of the RPR-Trunk interface are determined. For example, as shown in Fig.6, the member if3/0/0 includes ringlet 0 physical link port Link 00 and ringlet 1 physical link port Link 01; whereas the member if3/0/1 includes ringlet 0 physical link port Link 10 and ringlet 1 physical link port Link 11.

In step S106, the Trunk technology is used to combine the physical link ports of ringlet 0 and the physical link ports of ringlet 1 into one ringlet 0 logic and one ringlet 1 logic. For example, as shown in Fig.6, with the Trunk technology similar to the related arts, the ringlet 0 physical link port Link 00 of the member if3/0/0 and the ringlet 0 physical link port Link 10 of the member if3/0/1 are combined into one ringlet 0 logical link port Link 0. With the Trunk technology similar to the related arts, the ringlet 1 physical link port Link 01 of the member if3/0/0 and the ringlet 1 physical link port Link 11 of the member if3/0/1 are combined into one ringlet 1 logical link port Link 1. Specifically, the combination using the Trunk technology similar to the related arts may include: assigning the same logical address to several physical link ports, and allocating the traffic of the RPR among the several physical link ports with a certain algorithm.

To implement the trunking and usage of the RPR interfaces, the present invention includes the following operations.

It is assumed that two RPR-Trunk interfaces are present on a specified station, for example, station 0: RPR-Trunk I having member interfaces if3/0/0 and if3/0/1; and RPR-Trunk 2 having member interfaces if4/0/0 and if4/0/1.

1) Data insert: When the station receives a data packet from the input interface, it looks up the forwarding table entry. If passing through the ring is desired, the acquired output interface would be an RPR-Trunk interface, assuming, RPR-Trunk1 (corresponding to ringlet 0: eastward, that is, clockwise). To determine the specific output interface (the RPR physical interface) for the packet, the source MAC address and the destination MAC address in the packet are extracted. HASH is performed according to the source MAC address and the destination MAC address (the number of stations in the HASH table is two, equal to the number of members of the RPR-Trunk), to obtain a unique HASH KEY. The member interface corresponding to the KEY value is the actual insert interface for the packet. With this method, packets with the same source MAC address and destination MAC address will pass through the same actual RPR, and accordingly out-of-order will not happen.

2) Data transit: After an intermediate station receives a packet delivered from the RPR interface, the output interface found by looking up the forwarding table is also an RPR-Trunk interface. With the method the same as 1), the packet may be transmitted from a member interface of the Trunk interface.

3) Data copy and strip: The process is the same as that in the conventional RPR.

4) Process of the multicast and broadcast traffic: When the RPR-Trunk interface needs to transmit the multicast and broadcast traffic (data insert), only one fixed RPR interface (for example, the first member interface) may be selected for transmission, rather than all members. For other stations on the RPR, the process of the multicast and broadcast traffic is the same as that in the conventional RPR.

5) Learning of the station forwarding table entry: Because the MAC forwarding table entry of the RPR station may be obtained by self-learning, in the case of RPR-Trunk interface, the RPR-Trunk interface to which the learned RPR interface belongs should be recorded in the forwarding table as an output interface.

6) Fairness algorithm processing: An important feature of the RPR is the fairness algorithm. When a station detects traffic congestion on the ring (for example, in the direction of ringlet 0), a control packet is sent to the previous station along the opposite direction (the direction of ringlet 1) to request traffic decrease. After the process ends, the associated stations can use equal bandwidth on the ring, that is, fair bandwidth. For the RPR-Trunk interface, it is to be noted that when the control packet is transmitted in the opposite direction, it is transmitted from the opposite ring of the RPR physical interface where congestion is detected. Furthermore, when a station receiving the control packet wants to decrease traffic, it performs Commit Access Rate (CAR) processing as defined in the RPR protocol on the packet having the hashed output interface as the corresponding RPR physical interface.

7) Fault processing: When a link fails in the ring, there are two methods for self-healing.

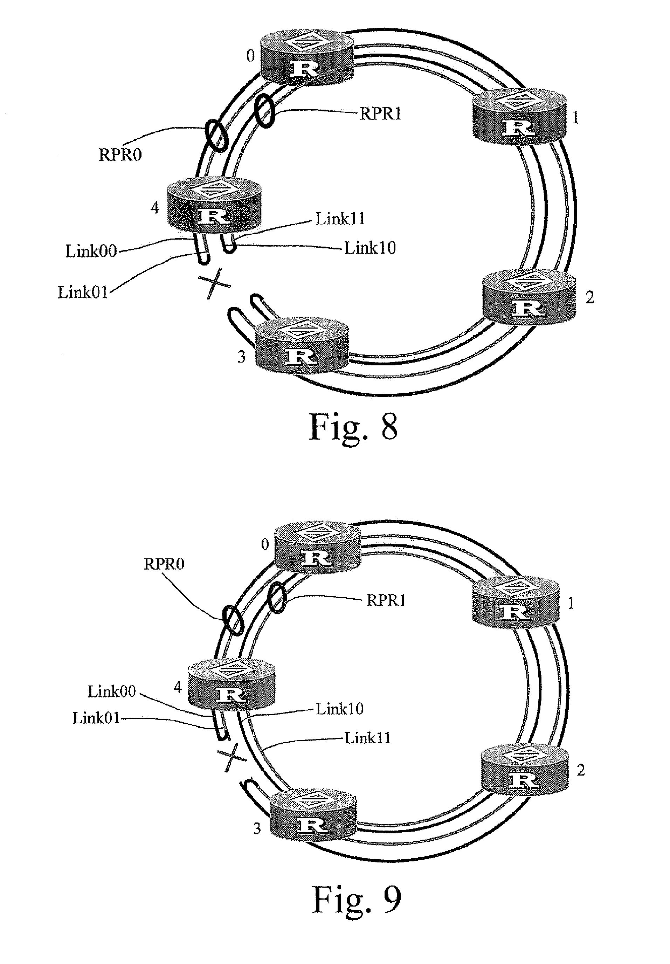

Fig.8 illustrates a topology for implementing fault processing in RPR interface trunking according to an embodiment of the present invention.

The first method is shown in Fig.8. When a link between station 3 and station 4 fails, Link 00 and Link 01 are connected at station 4, and Link 10 and Link 11 are connected. The respective links at station 3 are connected like Link 00, Link 01, Link 10 and Link 11 at station 4. In this manner, two new rings RPR 0 and RPR 1 are formed.

In the above first method, ringlets 0 and ringlets 1 of all RPR member interfaces in the RPR-Trunk interfaces of the stations on both ends of the failing link are connected to form new rings. The remaining process is the same as that in the conventional RPR.

Fig.9 illustrates a topology for implementing fault processing in RPR interface trunking according to another embodiment of the present invention.

The second method is shown in Fig.9. When a link between station 3 and station 4 fails, Link 00 and Link 01 at station 4 are connected, and the respective links at station 3 are connected like Link 00 and Link 01 at station 4, so as to form a ring RPR 0. Furthermore, Link 10 and Link 11 at station 4 and Link 10 and Link 11 at station 3 are connected to form a ring RPR 1.

In the above second method, ringlets 0 and ringlets 1 of the RPR interfaces of the stations at both ends of the failing link are connected to form a new ring. The remaining process is the same as that in the conventional RPR. Furthermore, other members in the RPR-Trunk interfaces are not affected. The processes on the data, that is, insert, transit, copy and strip operations, are the same as that in the RPR-Trunk interface described above. When the selected output interface (a member in the Trunk interface is selected via HASH) is an RPR interface associated with the failing link, the ringlet 0 and ringlet 1 here should be connected. With this method, the ring may operate normally even if many links fail in the ring.

8) Configuration of the RPR-Trunk interface: Trunk use of the RPR interfaces requires that the RPR-Trunk interfaces and their members are paired when interface trunking is performed, and as a conventional RPR interface, a member RPR interface has complete ringlet 0 and ringlet 1 (without consideration of faults). Such a configuration relationship may be set by manually configuring the network, or be checked dynamically by extending the RPR protocol. If they cannot be paired normally, an alarm is generated or the interface cannot be activated (UP).

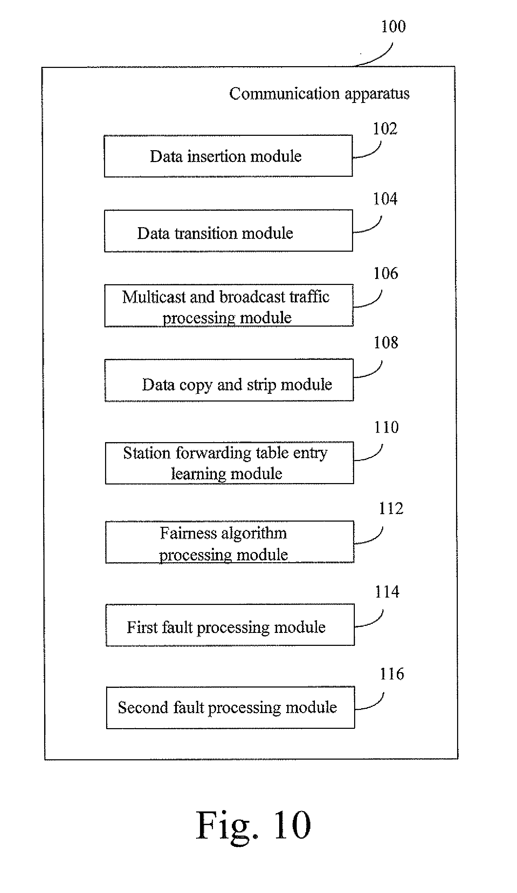

Fig.10 illustrates a communication apparatus with a trunk interface according to an embodiment of the present invention. The communication apparatus 100 includes the following modules.

A data insertion module 102 is adapted to perform data insert function in the RPR protocol. When the communication apparatus receives a packet, HASH operation is performed on the packet according to the RPR protocol, to obtain a unique hash value. The interface of the station corresponding to the value is taken as the actual insert interface for the packet, so as to determine a physical link in an RPR interface in the multiple RPR interfaces the packet is to pass through.

A data transition module 104 is adapted to perform data transit function in the RPR protocol. When the communication apparatus receives the transmitted packet, HASH operation is performed on the packet according to the RPR protocol, to obtain a unique hash value. The interface of the station corresponding to the value is taken as the actual transit interface for the packet, to determine a physical link in an RPR interface in the multiple RPR interfaces the packet is to pass through.

A data copy and strip module 106 is adapted to perform data copy and strip function in the RPR protocol based on a provision in the RPR protocol.

A multicast and broadcast traffic processing module 108 is adapted to process multicast and broadcast traffic in the RPR protocol. When multicast and broadcast traffic is to be transmitted over the trunk interface, only one of the RPR interfaces is selected for transmission.

A station forwarding table entry learning module 110 is adapted to perform station forwarding table entry learning in the RPR protocol, and record the trunk interface to which one of the learned RPR interfaces belongs as an output interface in a forwarding table.

A fairness algorithm processing module 112 is adapted to process a fairness algorithm in the RPR protocol. When it is detected at a station that traffic congestion occurs on one of ringlet 0 and ringlet 1 of the RPR, a control packet requesting traffic decrease is sent to the previous station along the opposite direction of the other ring. When the control packet is sent in the opposite direction, it is sent from the opposite ring of the member interface at which congestion is detected. When the associated station receiving the control packet decreases traffic, a CAR processing as defined in the RPR protocol is performed on the packets having the output interface obtained via HASH operation as the associated member interface.

A first fault processing module 114 is adapted to perform fault processing in the RPR protocol. When any fault occurs on a link between the communication apparatus and another communication apparatus adjacent on the RPR, and the another communication apparatus also includes the trunk interface, the first and second physical links of all RPR interfaces in the trunk interface of the communication apparatuses on both ends of the link are connected, so as to form a new ring.

A second fault processing module 116 is adapted to perform fault processing in the RPR protocol. When any fault occurs on a link between the communication apparatus and another communication apparatus adjacent on the RPR, and the another communication apparatus also includes the trunk interface, the first and second physical links of the failing RPR interfaces in the trunk interface of the communication apparatuses on both ends of the link are connected, so as to form a new ring.

With the solutions in the embodiments of the present invention, the interface bandwidth may be increased and the address (MAC address/IP address) resources may be saved. With the solutions in the embodiments, the interface (link) reliability may be increased, because multiple links form redundant links. Even if one physical link fails, data may be transmitted over other links and the Trunk link may still be considered normal.

Descriptions are given above with reference to preferred embodiments of the present invention, which shall not be used to limit the present invention. Various modifications and changes to these embodiments will be readily apparent to those skilled in the art. Within the spirit and scope of the present invention, all modifications and changes fall within the scope of the present invention.

## Claims

1. An interface trunking method for implementing interface trunking in Resilient Packet Rings (RPRs) with a plurality of stations, at least one of the stations comprising a plurality of RPR interfaces, each of the RPR interfaces comprising a first physical link port and a second physical link port, wherein the method comprises:
combining the plurality of first physical link ports into a first logical link port, so as to implement logical combination of a plurality of first physical links;
combining the plurality of second physical link ports into a second logical link port, so as to implement logical combination of a plurality of second physical links;
forming a trunk interface with the first logical link port and the second logical link port; and
assigning a logical address to the trunk interface.

2. The interface trunking method according to claim 1, further comprising:
apportioning the communication traffic of the stations among each of the plurality of first physical link ports with a predetermined algorithm; and
apportioning the communication traffic of the stations among each of the plurality of second physical link ports with the predetermined algorithm.

3. The interface trunking method according to claim 1, wherein the logical address is a Media Access Control (MAC) address.

4. The interface trunking method according to any one of claims 1 to 3, wherein the plurality of first physical links are provided on the clockwise rings of the RPRs, and the plurality of second physical links are provided on the counterclockwise rings of the RPRs; or
the plurality of second physical links are provided on the clockwise rings of the RPRs, and the plurality of first physical links are provided on the counterclockwise rings of the RPRs.

5. The interface trunking method according to claim 4, wherein the trunk interface is compliant with the RPR protocol, adapted to perform the RPR interface function as defined in the RPR protocol.

6. An interface trunking apparatus, adapted to implement interface trunking in Resilient Packet Rings (RPRs) with a plurality of stations, at least one of the stations comprising a plurality of RPR interfaces, each of the RPR interfaces comprising a first physical link port coupled to a first physical link and a second physical link port coupled to a second physical link, wherein the interface trunking apparatus comprises:
a first combination module, adapted to combine the plurality of first physical link ports into a first logical link port, so as to implement logical combination of the plurality of first physical links;
a second combination module, adapted to combine the plurality of second physical link ports into a second logical link port, so as to implement logical combination of the plurality of second physical links; and
an interface forming module, adapted to form a trunk interface for communication with the first logical link port and the second logical link port.

7. A trunk interface for use in Resilient Packet Rings (RPRs) with a plurality of stations, at least one of the stations comprising a plurality of RPR interfaces, each of the RPR interfaces comprising a first physical link port coupled to a first physical link and a second physical link port coupled to a second physical link, wherein the trunk interface comprises:
a first logical link port formed by combining the plurality of first physical link ports; and
a second logical link port formed by combining the plurality of second physical link ports.

8. A communication apparatus with a trunk interface, adapted to perform communication function in Resilient Packet Ring (RPRs) according to the RPR protocol, comprising:
a first logical link port formed by combining a plurality of first physical link ports; and
a second logical link port formed by combining a plurality of second physical link ports.

9. The communication apparatus according to claim 8, further comprising:
a data insert module, adapted to perform data insert function in the RPR protocol.

10. The communication apparatus according to claim 8 or 9, further comprising:
a data transit module, adapted to perform data transit function in the RPR protocol.

11. The communication apparatus according to claim 8, further comprising:
a data copy and strip module, adapted to perform data copy and strip function in the RPR protocol based on a provision in the RPR protocol.

12. The communication apparatus according to claim 8, further comprising:
a multicast and broadcast traffic processing module, adapted to process multicast and broadcast traffic in the RPR protocol.

13. The communication apparatus according to claim 8, further comprising:
a station forwarding table entry learning module, adapted to perform station forwarding table entry learning in the RPR protocol, and record the trunk interface to which the learned RPR interface belongs in a forwarding table as an output interface.

14. The communication apparatus according to claim 8, further comprising:
a fairness algorithm processing module, adapted to process a fairness algorithm in the RPR protocol, wherein
when it is detected in a station that traffic congestion occurs on one of ringlet 0 and ringlet 1 of the RPR, a control packet requesting traffic decrease is sent to the previous station along the opposite direction of the other ring, the control packet being sent from the opposite ring of the member interface in which congestion is detected; and
after the associated station receives the control packet, an output interface performs Commit Access Rate (CAR) processing on packets of the associated member interface as defined in the RPR protocol.

15. The communication apparatus according to claim 8, further comprising:
a first fault processing module, adapted to perform fault processing in the RPR protocol, wherein
when any fault occurs on a link between the communication apparatus and another communication apparatus adjacent on the RPRs, and the another communication apparatus also comprises the trunk interface, the first and second physical links of all RPR interfaces in the trunk interface of the communication apparatuses on both ends of the link are connected to form a new ring.

16. The communication apparatus according to claim 8, further comprising:
a second fault processing module, adapted to perform fault processing in the RPR protocol, wherein
when any fault occurs on a link between the communication apparatus and another communication apparatus adjacent on the RPR, and the another communication apparatus also comprises the trunk interface, the first and second physical links of the failing RPR interfaces in the trunk interface of the communication apparatuses on both ends of the link are connected to form a new ring.
